# EUROPÄISCHE PATENTSCHRIFT

(11) **EP 0 570 746 B1**
(45) Veröffentlichungstag und Bekanntmachung des Hinweises auf die Patenterteilung: **29.12.1997**
(21) Anmeldenummer: 93107117.9
(22) Anmeldetag: 03.05.1993
(51) Int. Cl.: C08K 5/18, C08L 95/00, C08L 23/02

(54) **Thermoplastische Formmasse auf der Basis von Bitumen**
Thermoplastic moulding mass based on bitumen
Masse de moulage thermoplastique à base de bitume

(30) Priorität: 19.05.1992 DE 4216547
(43) Veröffentlichungstag der Anmeldung: 24.11.1993
(73) Patentinhaber: BASF Aktiengesellschaft, 67063 Ludwigshafen (DE)
(72) Erfinder: Bluemel, Thomas, Dr., W-6701 Erpolzheim (DE); Schoene, Werner, Dr., W-6905 Schriesheim (DE)

(56) Entgegenhaltungen:
- DE-A- 1 815 873
- US-A- 2 396 669

## Beschreibung

Die vorliegende Erfindung betrifft eine neue thermoplastische Formmasse, enthaltend
A) Bitumen einer Nadelpenetration nach DIN 1995 von 3 bis 100,
B) Estergruppen enthaltende Olefincopolymerisate oder Gemische aus diesen Olefincopolymersaten und anderen Olefincopolymerisaten und -homopolymerisaten.

Sieht man von der erfindungsgemäßen Verbesserung ab, sind solche thermoplastischen Formmassen aus der DE-A-24 35 753 oder der DE-A-33 19 844 (EP-A-0 130 367) bekannt. Diese thermoplastischen Formmassen werden für die Herstellung von Dach- und Dichtungsbahnen für den Hoch- und Tiefbau verwendet und haben sich auf diesem technischen Gebiet sehr gut bewährt. Indes neigen diese bekannten thermoplastischen Formmassen und die aus ihnen hergestellten Dach- und Dichtungsbahnen noch immer dazu, Bitumenöle auszuschwitzen. Dies führt bei den granulierten Formmassen zum Verbacken der Granulatkörner, und bei den Dach- und Dichtungsbahnen hat dies die Bildung eines feinen Ölfilms auf der Oberfläche zur Folge. Wird dieser Bitumenölfilm der freien Bewitterung ausgesetzt, wie dies ja bei Dach- und Dichtungsbahnen der Fall ist, kommt es zu einer photochemischen Oxidation des Öls unter Bildung starker Säuren. Diese sogenannten "Bitumensäuren" sind starke organische Säuren, welche die Korrosion von metallischen Bauteilen bewirken, die mit den Dach- und Dichtungsbahnen in Berührung stehen. Außerdem können diese Bitumensäuren durch Nieselregen, äußeres Tau- und Schwitzwasser usw. aufgelöst werden, wonach sie in Traufflächen, Dachrinnen und Regenfall-Leitungen schwerwiegende Korrosionsschäden anrichten.

Um die Bitumenkorrosion zu verhindern und die damit verbundenen enormen wirtschaftlichen Schäden zu verringern, kann man zum einen versuchen, das Bitumenöl in der Formmasse selbst zu binden und am Ausschwitzen zu hindern. Dies kann man in gewissem Umfang durch spezielle Bitumen/Olefincopolymerisat-Mischungen erreichen (vgl. die DE-A-13 01 114, die DE-A-23 53 439 oder die DE-A-24 43 343). Außerdem kann man den Austritt der Bitumenöle aus der Formmasse durch eine Lackierung ihrer Oberfläche verhindern (vgl. die DE-A-21 27 416), oder man kann ausgeschwitzte Bitumenöle mit Talkum, Kohlenstaub u.a. absorbieren. Indes bieten diese Maßnahmen bei extremen Witterungsbedingungen keinen völlig zuverlässigen Langzeitschutz gegen die Bitumenkorrosion, so daß zu ihrer Verhinderung zusätzliche, aufwendige Maßnahmen getroffen werden müssen. Hierbei handelt es sich vor allem um das Auftragen von Schutzanstrichen auf den Dach- und Dichtungsbahnen sowie den korrosionsgefährdeten Metallbauteilen (vgl. "Richtlinien für die Ausführung von Metall-Dächern, -Außenwandbekleidungen und Bauklempner-Arbeiten" (Fachregeln des Klempner-Handwerks), Zentralverband Sanitär-Heizung-Klima, ZVSHK, St. Augustin, Sept. 1991, Seiten 17 und 21; "Bauelemente aus Titanzink mit RAL-, Güte- und Dikkenkennzeichnung", RAL-RG 681, Tabellen und Daten, Gütegemeinschaft Bauelemente aus Titanzink e.V., Friedrich-Ebert-Str. 37-39, 4000 Düsseldorf 1; und "Verarbeitungsvorschrift und Verlegeanleitung für ECB-Dachbahnen", Fassung 1991, aufgestellt vom Arbeitskreis ECB-Dachbahnenhersteller in Zusammenarbeit mit Technischer Arbeitskreis Kunststoff- und Kautschukbahnen e.V. (TAKK), BASF Aktiengesellschaft, 6700 Ludwigshafen). Zwar können diese Maßnahmen in den allermeisten Fällen Korrosionsschäden verhindern, indes bringt ihre Durchführung einen zusätzlichen Arbeits- und Materialaufwand mit sich, welcher zu einer finanziellen Mehrbelastung des Bauherren führt.

Aufgabe der vorliegenden Erfindung ist es, eine neue thermoplastische Formmasse der eingangs genannten Art bereitzustellen, welche auch bei lang andauernder Bewitterung ohne zusätzliche Korrosionsschutzmaßnahmen keine Bitumenkorrosion hervorruft. Diese Aufgabe konnte durch die Zugabe bestimmter aromatischer Diamine zu der eingangs genannten thermoplastischen Formmasse gelöst werden. Im Hinblick auf den Stand der Technik und die Tatsache, daß übliche und bekannte Antioxidantien wie sterisch gehinderte Phenole oder Lichtstabilisatoren wie sterisch gehinderte Amine und Piperidinderivate die Bitumenkorrosion nicht wirksam verhindern können, stand es nicht zu erwarten, daß gerade die speziellen aromatischen Diamine die Problemlösung bieten.

Demgemäß handelt es sich bei dem Gegenstand der vorliegenden Erfindung um die neue thermoplastische Formmasse, enthaltend
A) Bitumen einer Nadelpenetration nach DIN 1995 von 3 bis 100,
B) Estergruppen enthaltende Olefincopolymerisate oder Gemische aus diesen Olefincopolymersaten und anderen Olefincopolymerisaten und -homopolymerisaten sowie
C) 0,01 bis 10 Gew.-%, bezogen auf die Formmasse, mindestens eines aromatischen Amins der allgemeinen Formel I, 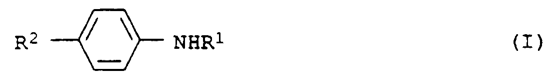 worin die Variablen die folgende Bedeutung haben:
   - R¹: Phenylrest und linear anellierter und/oder kondensierter mehrkerniger aromatischer Rest mit 10 bis 20 Kohlenstoffatomen;
   mit einer oder mehreren C₁- bis C₁₂-Alkylgruppen substituierter Phenylrest;
   mit einer oder mehreren C₁- bis C₁₂-Alkylgruppen substituierter linear anellierter und/oder kondensierter mehrkerniger aromatischer Rest mit 10 bis 20 Kohlenstoffatomen;
   - R²: Rest -NHR¹ und -NHCₙH₂ₙ₊₁, worin der Index n für 0 oder eine ganze Zahl von 1 bis 8 steht.

Im folgenden wird diese neue thermoplastische Formmasse der Kürze halber als "erfindungsgemäße Formmasse" bezeichnet.

Der erfindungsgemäß wesentliche Bestandteil der erfindungsgemäßen Formmasse ist mindestens ein aromatisches Amin (C) der allgemeinen Formel I. Dieses erfindungsgemäß zu verwendende aromatische Amin (C) ist in der erfindungsgemäßen Formmasse in einer Menge von, bezogen auf die erfindungsgemäße Formmasse, 0,01 bis 10 Gew.-% enthalten. Geringere Mengen als 0,01 Gew.-% bieten keinen zuverlässigen Schutz vor der Bitumenkorrosion mehr. Im allgemeinen erübrigt es sich, den Anteil des erfindungsgemäß zu verwendenden Amins (C) an der erfindungsgemäßen Formmasse über 10 Gew.-% hinaus zu erhöhen, weil die hieraus resultierende Steigerung der Schutzwirkung nicht den erhöhten Materialaufwand rechtfertigt. Demnach handelt es sich bei dem Mengenbereich von 0,01 bis 10 Gew.-% um einen optimalen Bereich, innerhalb dessen die Menge des erfindungsgemäß zu verwendenden Amins (C) frei gewählt und der stofflichen Zusammensetzung der erfindungsgemäßen Formmasse und ihrem Anwendungszweck hervorragend angepaßt werden kann. Innerhalb dieses optimalen Mengenbereichs ist derjenige von 0,1 bis 5 Gew.-% hervorzuheben, weil erfindungsgemäße Formmassen eines solchen Anteils an erfindungsgemäß zu verwendendem Amin (C) besonders hervorragende anwendungstechnische Eigenschaften aufweisen.

In der allgemeinen Formel I steht die Variable R¹ für einen Phenylrest oder einen linear anellierten und/oder kondensierten mehrkernigen aromatischen Rest mit 10 bis 20 Kohlenstoffatomen. Jeder dieser Reste kann mit einer oder mehreren C₁- bis C₁₂-Alkylgruppen substituiert sein.

Beispiele erfindungsgemäß geeigneter unsubstituierter Reste R¹ sind Phenyl-, Naphth-1- und -2-yl- sowie Biphenyl-1-, -2- und -3-yl-Reste.

Beispiele geeigneter C₁- bis C₁₂-Alkylgruppen sind Methyl-, Ethyl-, n-Propyl-, i-Propyl-, n-Butyl-, n-Pentyl-, n-Hexyl-, 1,3-Dimethylbutyl-, Cyclohexyl-, n-Heptyl-, 4-Methylcyclohex-1-yl-, n-Octyl-, 2-Ethylhex-1-yl-, Nonyl-, Decyl-, Undecyl- und Dodecyl-Reste.

Beispiele gut geeigneter substituierter Reste R¹ sind 2-, 3- und 4-Methylphen-l-yl-Reste sowie 2,6-Dimethylphen-1-yl- und 4-Ethylphen-1-yl-Reste.

Beispiele besonders gut geeigneter Reste R¹ sind Phenyl-, 4-Methylphen-1-yl-, 4-Ethylphen-1-yl-, 2-Methylphen-1-yl- und Biphenyl-1-yl-Reste, von denen der Phenylrest besonders vorteilhaft ist und deshalb ganz besonders bevorzugt verwendet wird.

In der allgemeinen Formel I steht die Variable R² für einen Rest -NHR¹ oder NHCₙH₂ₙ₊₁, worin der Index n für 0 oder eine ganze Zahl von 1 bis 8 steht. Demnach kommen für den Aufbau des Restes R² alle vorstehend genannten Reste R¹ und alle vorstehend genannten C₁- bis C₈-Alkylgruppen in Betracht.

Beispiele erfindungsgemäßer gut geeigneter Reste R² sind Aminogruppen und N-Methyl-, N-Ethyl-, N-n-Propyl-, N-i-Propyl-, N-n-Butyl-, N-n-Pentyl-, N-n-Hexyl-, N-1,3-Dimethylbutyl-, N-Cyclohexyl-, N-n-Heptyl-, N-4-Methylcyclohex-1-yl-, N-n-Octyl-, N-2-Ethylhex-1-yl-, N-Phenyl-, N-4-Methylphen-1-yl- und N-4-Ethylphen-1-yl-Aminoreste. Von diesen sind die Aminogruppen und die N-Phenyl-Aminoreste vorteilhaft und werden deshalb bevorzugt verwendet. Weil die N-Phenyl-Aminoreste ganz besondere Vorteile zur Folge haben, werden sie erfindungsgemäß ganz besonders bevorzugt verwendet.

Beispiele besonders bevorzugter aromatischer Amine (C) sind die aromatischen Amine (C1) bis (C9): 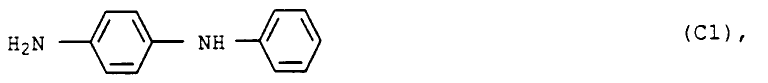 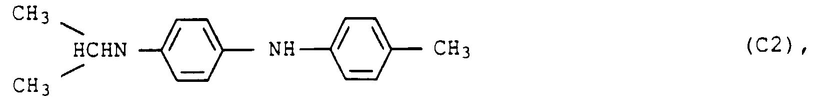 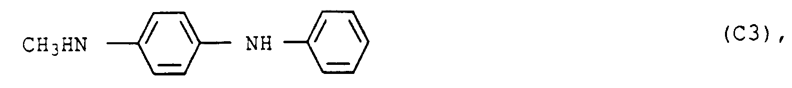 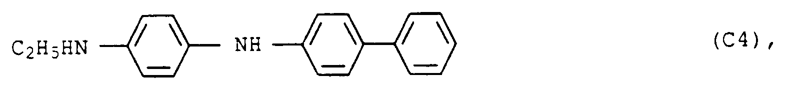 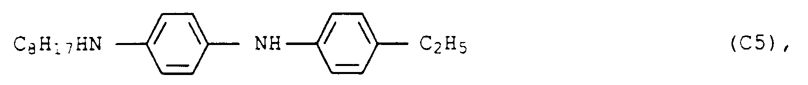 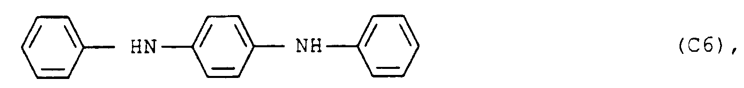 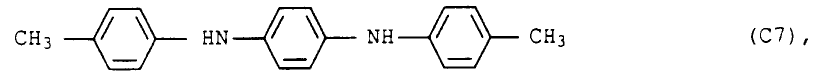 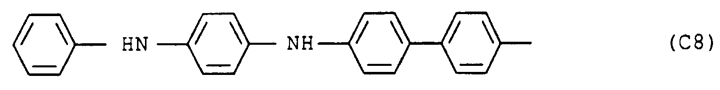 und

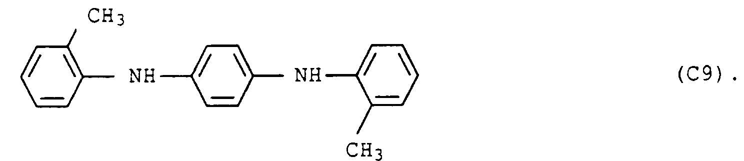

Von all diesen Verbindungen ist N,N'-Diphenyl-phen-1,4-ylendiamin (C6) ganz besonders vorteilhaft und wird deshalb ganz besonders bevorzugt in den erfindungsgemäßen Formmassen verwendet.

Die erfindungsgemäß zu verwendenden aromatischen Amine (C) sind übliche und bekannte Verbindungen, welche im Handel erhältlich sind oder nach üblichen und bekannten Methoden der organischen Chemie hergestellt werden können.

Der weitere wesentliche Bestandteil der erfindungsgemäßen Formmasse ist Bitumen (A). Hierunter sind die in der DIN 55946 definierten, bei schonender Aufarbeitung von Erdölen gewonnenen, dunkelfarbigen, halbfesten bis springharten, schmelzbaren, hochmolekularen Kohlenwasserstoffgemische zu verstehen. Die für die Herstellung der erfindungsgemäßen Formmasse geeigneten Bitumen (A) haben nach DIN 1995 eine Nadelpenetration von 3 bis 100. Im allgemeinen weisen sie einen Erweichungspunkt nach DIN 1995 (Ring und Kugel) von 40 bis 140°C auf. Für die Herstellung der erfindungsgemäßen Formmasse kommen alle handelsüblichen natürlichen und synthetischen Bitumensorten in Betracht. Besonders geeignet sind Extraktions- und/oder Fällungsbitumen, welche nach DIN 1995 eine Penetration von 3 bis 10 und einen Erweichungspunkt nach DIN 1995 (Ring und Kugel) zwischen 40 und 110°C aufweisen. Unter Extraktions- und/oder Fällungsbitumen werden ölarme Bitumensorten verstanden, welche entsprechend spröde und hart sind und nur eine geringe Penetration aufweisen. Weitere geeignete Bitumen (A) sind aus der DE-A-24 41 203 oder der US-A-3 980 598 bekannt.

Der weitere wesentliche Bestandteil der erfindungsgemäßen Formmasse bildet mindestens ein Estergruppen enthaltendes Olefincopolymerisat (B). Für die Herstellung der erfindungsgemäßen Formmasse kommen alle estergruppenhaltigen Olefincopolymerisate (B) in Betracht, welche mit Bitumen (A) stabile Gemische bilden. Beispiele geeigneter estergruppenhaltiger Copolymerisate (B) sind die Copolymerisate von Ethylen und/ oder Propylen mit Vinylestern von C₁- bis C₆-Alkancarbonsäuren und mit C₁- bis C₆-Alkylestern von C₃- bis C₄-Alkencarbonsäuren. Beispiele geeigneter Ester dieser Art sind Vinylacetat und -propionat sowie Methyl-, Ethyl-, n-Propyl-, i-Propyl-, n-Butyl-, tert.-Butyl-, n-Pentyl-, n-Hexyl- und Cyclohexylacrylat und -methacrylat. Im allgemeinen enthalten die erfindungsgemäß zu verwendenden Olefincopolymerisate (B) die vorstehend genannten einpolymerisierten Ester in einer Menge von 1 bis 30, vorzugsweise 5 bis 25 und insbesondere 7 bis 20 Gew.-%. Im allgemeinen weisen die Olefincopolymerisate (B) einen Schmelzindex zwischen 0,2 und 25, vorzugsweise 1,0 bis 10 g/10 min auf, gemessen nach ASTM D 138-65 T bei einer Temperatur von 190°C und einem Auflagegewicht von 2,16 kg. Vorteilhafterweise liegt die Dichte der Olefincopolymerisate (B) zwischen 0,89 und 0,97 g/cm³, gemessen nach DIN 53479.

Anstelle der vorstehend beschriebenen Olefincopolymerisate (B) können auch Gemische aus diesen Olefincopolymerisaten und anderen Olefincopolymerisaten und -homopolymerisaten als Komponente (B) der erfindungsgemäßen Formmasse verwendet werden. Beispiele geeigneter anderer Olefincopolymerisate sind Ethylencopolymerisate, welche 3 bis 20 Gew.-% eines C₄- bis C₁₀-α-Olefins einpolymerisiert enthalten und eine Dichte von 0,89 bis 0,94 aufweisen. Beispiele geeigneter Olefinhomopolymerisate sind Polyethylene hoher und niedriger Dichte, Polypropylen und Polyisobutylen.

Im allgemeinen enthält die erfindungsgemäße Formmasse die Komponente (A) in einer Menge von 10 bis 90 Gew.-% und die Komponente (B) in einer Menge von 90 bis 10 Gew.-%.

Darüber hinaus kann die erfindungsgemäße Formmasse noch übliche und bekannte Zusatzstoffe wie langkettige aliphatische Amine (vgl. die DE-A-24 43 343), Dimethylterephthalat oder Phthalodinitril (vgl. die DE-A-24 35 753), Kreide, Eisenoxidrot, Schiefermehl, Ruß, Kohlenstaub, Talkum, Glasfasern, Stein- oder Schlackenfasern, Holzstaub, Gummimehl, Sand, Kalksteinmehl, Kieselgur, Schwerspat, Asbest, Tonerde, Dolomitpulver, Titandioxid, Bentonit sowie Magnesium-, Calcium-, Strontium-, Barium-, Zink-, Cadmium-, Blei-, Aluminium-, Mangan- und Titanpalmitat und -stearat (vgl. die DE-A-23 53 439) enthalten, wobei die Mengen der Zusatzstoffe je nach ihrer Natur und dem Anwendungszweck der erfindungsgemäßen Formmasse sehr breit variieren können.

Methodisch gesehen weist die Herstellung der erfindungsgemäßen Formmasse keine Besonderheiten auf, sondern kann in üblicher und bekannter Weise durch Homogenisieren der Bestandteile mittels Kneter, Rührwerken, Walzwerken oder Extrudern bei Temperaturen von 150 bis 250°C erfolgen.

Die erfindungsgemäße Formmasse weist zahlreiche besondere Vorteile auf. So kann sie in besonders einfacher und wirtschaftlicher Weise hergestellt und zu Formteilen wie Dach- und Dichtungsbahnen weiterverarbeitet werden, welche so gut wie keine Bitumenkorrosion mehr aufweisen.

### Beispiele und Vergleichsversuche

### Beispiel 1 und Vergleichsversuche V1 bis V3

Die Herstellung einer erfindungsgemäßen Formmasse (Beispiel 1) und nicht erfindungsgemäßer Formmassen (Vergleichsversuche Vl bis V3) und die Neigung der hergestellten Formmassen, bei der Bewitterung Bitumensäuren zu bilden.

### Versuchsvorschrift:

Die Formmassen des Beispiels 1 und der Vergleichsversuche V1 bis V3 wurden durch Extrusion ihrer Bestandteile hergestellt. Die resultierenden Formmassen wurden granuliert und zu 2 mm dicken Bahnen geformt. Für die Untersuchung der Neigung, Bitumensäuren zu bilden, wurden diesen Bahnen Proben der Abmessung DIN A4 entnommen. Diese Proben wurden in einem Flachbelichter mit UV-B-Strahlung während 14 Tagen intensiv bestrahlt und zur Simulation von Kondenswasserbildung zweimal täglich mit Wasser besprüht. Nach Beendigung der künstlichen Bewitterung wurden die Oberflächen der Proben mit destilliertem Wasser unter Zuhilfenahme eines Gummischabers abgewaschen. Die hierbei resultierenden Wasserproben wurden auf ein einheitliches Volumen von jeweils 20 ml gebracht, wonach der pH-Wert der Wasserproben gemessen wurde. Die betreffenden Werte finden sich zusammen mit der stofflichen Zusammensetzung der Formmassen in der Tabelle 1.

Die Tabelle 1 untermauert, daß unter den angewandten drastischen künstlichen Bewitterungsbedingungen die Bildung von Bitumensäuren nur im Falle der erfindungsgemäßen Formmasse des Beispiels 1 unterdrückt war. Im Gegensatz dazu kam es bei den nicht erfindungsgemäßen Formmassen der Vergleichsversuche V1 bis V3 zur verstärkten Bildung der stark korrodierenden Bitumensäuren.

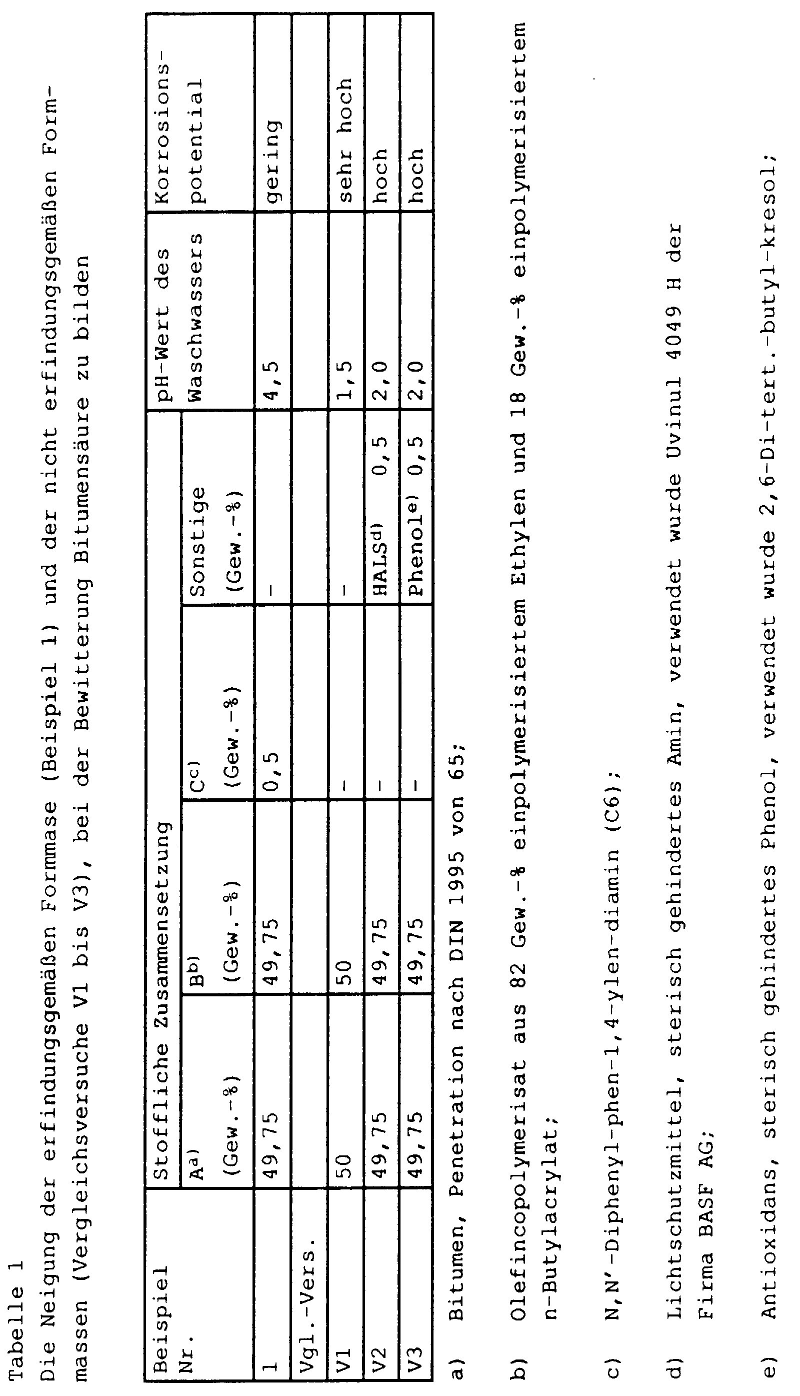

### Beispiel 2 und Vergleichsversuche V4 bis V6

Die Stabilisierung von Bitumenöl gegenüber der Einwirkung von UV-Strahlung

### Versuchsvorschrift:

Für die Durchführung des Beispiels 2 und der Vergleichsversuche V5 und V6 wurde Bitumenöl mit unterschiedlichen Stabilisatoren versetzt und in flachen Schalen während 14 Tagen in einem Flachbelichter intensiver UV-Bestrahlung ausgesetzt.

Hierbei kamen bei dem Beipiel 2 1 Gew.-% N,N'-Diphenylphen-1,4-ylen-diamin (C6), bei dem Vergleichsversuch V5 1 Gew.-% des Lichtschutzmittels des Vergleichsversuchs V2 und bei dem Vergleichsversuch V6 1 Gew.-% des Antioxidans des Vergleichsversuchs V3 zur Anwendung. Demgegenüber wurde dem Bitumenöl des Vergleichsversuchs V4 (Kontrollversuch) kein Stabilisator hinzugesetzt.

Die gemessenen Säurezahlen vor und nach der Belichtung sind in der Tabelle 2 zusammengestellt. Die Werte untermauern die überlegene Stabilisatorwirkung der erfindungsgemäß zu verwendenden aromatischen Amine (C) der allgemeinen Formel I.

**Tabelle 2**

| Die Stabilisierung von Bitumenöl gegenüber der Einwirkung von UV-Strahlung | | |
|---|---|---|
| Beispiel Nr. Nr. | Säurezahl nach DIN 53 402 (mg KOH/g) | |
| | vor der Belichtung | nach der Belichtung |
| 2 | 0,3 | 0,4 |
| Vgl.-Vers. | | |
| V4 | 0,4 | 7,8 |
| V5 | 0,1 | 5,9 |
| V6 | 0,3 | 4,2 |

## Patentansprüche

1. Thermoplastische Formmasse, enthaltend
A) Bitumen einer Nadelpenetration nach DIN 1995 von 3 bis 100,
B) Estergruppen enthaltende Olefincopolymerisate oder Gemische aus diesen Olefincopolymersaten und anderen Olefincopolymerisaten und -homopolymerisaten sowie
C) 0,01 bis 10 Gew.-%, bezogen auf die Formmasse, mindestens eines aromatischen Amins der allgemeinen Formel I, 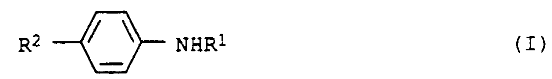 worin die Variablen die folgende Bedeutung haben:
R¹ Phenylrest und linear anellierter und/oder kondensierter mehrkerniger aromatischer Rest mit 10 bis 20 Kohlenstoffatomen;
mit einer oder mehreren C₁- bis C₁₂-Alkylgruppen substituierter Phenylrest;
mit einer oder mehreren C₁- bis C₁₂-Alkylgruppen substituierter linear anellierter und/oder kondensierter mehrkerniger aromatischer Rest mit 10 bis 20 Kohlenstoffatomen;
R² Rest -NHR¹ und -NHCₙH₂ₙ₊₁, worin der Index n für 0 oder eine ganze Zahl von 1 bis 8 steht.

2. Die thermoplastische Formmasse nach Anspruch 1, dadurch gekennzeichnet, daß die Variable R¹ der allgemeinen Formel I die folgende Bedeutung hat:
R¹ Phenyl-, Naphth-1- und -2-yl-Rest, Biphenyl-1-, -2- und -3-yl-Rest, 2-, 3- und 4-Methylphen-1-yl-Rest sowie 2,6-Dimethylphen-1- und 4-Ethylphen-1-yl-Rest.

3. Die thermoplastische Formmasse nach Anspruch 1 oder 2, dadurch gekennzeichnet, daß die Variable R² der allgemeinen Formel I die folgende Bedeutung hat:
R² Aminogruppe sowie N-Methyl-, N-Ethyl-, N-n-Propyl-, N-i-Propyl-, N-n-Butyl-, N-n-Pentyl-, N-n-Hexyl-, N-1,3-Dimethylbutyl-, N-Cyclohexyl-, N-n-Heptyl-, N-4-Methylcyclohex-l-yl-, N-n-Octyl-, N-2-Ethylhex-1-yl-, N-Phenyl-, N-4-Methylphen-1-yl- und N-4-Ethylphen-1-yl-Aminorest.

4. Die thermoplastische Formmasse nach einem der Ansprüche 1 bis 3, dadurch gekennzeichnet, daß die Variable R¹ für einen Phenylrest steht.

5. Die thermoplastische Formmasse nach einem der Ansprüche 1 bis 4, dadurch gekennzeichnet, daß die Variable R² für einen N-Phenyl-Aminorest steht.

6. Die thermoplastische Formmasse nach einem der Ansprüche 1 bis 5, dadurch gekennzeichnet, daß sie das aromatische Amin (C) in einer Menge von, bezogen auf die Formmasse, 0,1 bis 5 Gew.-% enthält.

7. Verwendung der thermoplastischen Formmasse gemäß einem der Ansprüche 1 bis 6 für die Herstellung von Dach- und Dichtungsbahnen für den Hoch- und Tiefbau.

8. Verwendung aromatischer Amine der allgemeinen Formel I, 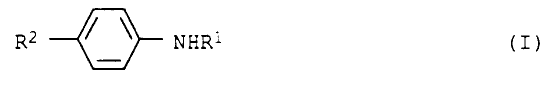 worin die Variablen die folgende Bedeutung haben:
R¹ Phenylrest und linear anellierter und/oder kondensierter mehrkerniger aromatischer Rest mit 10 bis 20 Kohlenstoffatomen;
mit einer oder mehreren C₁- bis C₁₂-Alkylgruppen substituierter Phenylrest;
mit einem oder mehreren C₁- bis C₁₂-Alkylgruppen substituierter linear anellierter und/oder kondensierter mehrkerniger aromatischer Rest mit 10 bis 20 Kohlenstoffatomen;
R² Rest -NHR¹ und -NHCₙH₂ₙ₊₁, worin der Index n für 0 oder eine ganze Zahl von 1 bis 8 steht;
für die Stabilisierung von Bitumen enthaltenden Gemischen und Bitumenöl.

## Claims

1. A thermoplastic molding composition comprising
A) bitumen with a DIN 1995 needle penetration of from 3 to 100,
B) olefin copolymers which contain ester groups, or mixtures of these olefin copolymers and other olefin copolymers and olefin homopolymers and
C) from 0.01 to 10 % by weight, based on the molding composition, of at least one aromatic amine of the formula I, 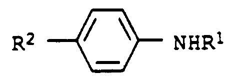 where
R¹ is phenyl or a linearly anellated and/or condensed polynuclear aromatic radical having from 10 to 20 carbon atoms;
phenyl substituted with one or more C₁-C₁₂-alkyl groups;
a linearly anellated and/or condensed polynuclear aromatic radical having from 10 to 20 carbon atoms which is substituted with one or more C₁-C₁₂-alkyl groups;
R² is -NHR¹ or -NHCₙH₂ₙ₊₁, where the index n is 0 or an integer from 1 to 8.

2. The thermoplastic molding composition as claimed in claim 1, wherein the variable R¹ of the formula I is:
R¹ phenyl, naphth-1- or -2-yl, biphenyl-1-, -2- or-3-yl, 2-, 3- or 4-methylphen-1-yl or 2,6-dimethylphen-1- or 4-ethylphen-1-yl.

3. The thermoplastic molding composition as claimed in claim 1 or 2, wherein the variable R² of the formula I is:
R² amino or N-methylamino, N-ethylamino, N-n-propylamino, N-isopropylamino, N-n-butylamino, N-n-pentylamino, N-n-hexylamino, N-1,3-dimethylbutylamino, N-cyclohexylamino, N-n-heptylamino, N-4-methylcyclohex-l-ylamino, N-n-octylamino, N-2-ethylhex-1-ylamino, N-phenylamino, N-4-methylphen-1-ylamino or N-4-ethylphen-1-ylamino.

4. The thermoplastic molding composition as claimed in any of claims 1 to 3, wherein the variable R¹ is phenyl.

5. The thermoplastic molding composition as claimed in any of claims 1 to 4, wherein the variable R² is N-phenylamino.

6. The thermoplastic molding composition as claimed in any of claims 1 to 5, which contains the aromatic amine (C) in an amount, based on the molding composition, of from 0.1 to 5 % by weight.

7. Use of the thermoplastic molding composition as claimed in any of claims 1 to 6 for producing prepared roofings and sealing sheets for building and civil engineering.

8. Use of aromatic amines of the formula I, 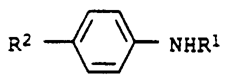 where
R¹ is phenyl or a linearly anellated and/or condensed polynuclear aromatic radical having from 10 to 20 carbon atoms;
phenyl substituted with one or more C₁-C₁₂-alkyl groups;
a linearly anellated and/or condensed polynuclear aromatic radical having from 10 to 20 carbon atoms which is substituted with one or more C₁-C₁₂-alkyl groups;
R² is -NHR¹ or -NHCₙH₂ₙ₊₁, where the index n is 0 or an integer from 1 to 8;
for stabilizing bitumen-containing mixtures and bitumen oil.

## Revendications

1. Masse à mouler thermoplastique, qui contient
A) des bitumes d'une pénétration d'aiguille selon DIN 1995 de 3 à 100,
B) des copolymères d'oléfines contenant des radicaux ester ou des mélanges de ces copolymères d'oléfines et d'autres homopolymères et copolymères d'oléfines, ainsi que
C) 0,01 à 10% en poids, par rapport à la masse à mouler, d'au moins une amine aromatique de la formule générale I: 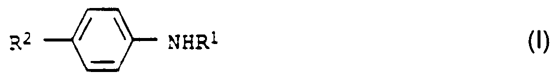 dans laquelle les variables ont les significations qui suivent:
R¹ représente un radical phényle ou un radical aromatique, multinucléaire, linéairement annelé et/ou condensé, comportant de 10 à 20 atomes de carbone;
un radical phényle substitué par un ou plusieurs groupes alkyle en C₁ à C₁₂;
un radical aromatique, multinucléaire, linéairement annelé et/ou condensé, comportant de 10 à 20 atomes de carbone, substitué par un ou plusieurs groupes alkyle en C₁ à C₁₂;
R² représente un radical -NHR¹ ou -NHCₙH₂ₙ₊₁, où l'indice n est égal à 0 ou représente un nombre entier qui varie de 1 à 8.

2. Masse thermoplastique suivant la revendication 1, caractérisée en ce que la variable R¹ de la formule générale I possède les significations suivantes :
R¹ représente un radical phényle, naphty-1- et -2-yle, biphényl-1-, -2- et -3-yle, 2-, 3- et 4-méthylphén-1-yle ou 2,6-diméthylphén-1- et 4-éthyl-phén-1-yle.

3. Masse à mouler thermoplastique suivant la revendication 1 ou 2, caractérisée en ce que la variable R² de la formule générale I possède les significations suivantes :
R² représente un radical amino, comme aussi un radical N-méthyl-, N-éthyl-, N-n-propyl-, N-i-propyl-, N-n-butyl-, N-n-pentyl-, N-n-hexyl-, N-1,3-diméthylbutyl-, N-cyclohexyl-, N-n-heptyl-, N-4-méthylcyclohex-1-yl-, N-n-octyl-, N-2-éthyl-, hex-1-yl-, N-phényl-, N-4-méthylphén-1-yl- et N-4-éthylphén-1 -yl-amino.

4. Masse à mouler thermoplastique suivant l'une quelconque des revendications 1 à 3, caractérisée en ce que la variable R¹ représente le radical phényle.

5. Masse à mouler thermoplastique suivant l'une quelconque des revendications 1 à 4, caractérisée en ce que la variable R² représente le radical N-phénylamino.

6. Masse à mouler thermoplastique suivant l'une quelconque des revendications 1 à 5, caractérisée en ce qu'elle contient l'amine aromatique (C) en une proportion de 0,1 à 5% en poids, par rapport à la masse à mouler.

7. Utilisation de la masse à mouler thermoplastique suivant l'une quelconque des revendications 1 à 6 pour la fabrication de bandes de couverture pour toitures et de bandes d'étanchéité pour la construction de bâtiments et les travaux publics.

8. Utilisation d'amines aromatiques de la formule générale I: 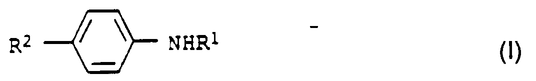 dans laquelle les variables ont les significations qui suivent :
R¹ représente un radical phényle ou un radical aromatique, multinucléaire, linéairement annelé et/ou condensé, comportant de 10 à 20 atomes de carbone;
un radical phényle substitué par un ou plusieurs groupes alkyle en C₁ à C₁₂;
un radical aromatique, multinucléaire, linéairement annelé et/ou condensé, comportant de 10 à 20 atomes de carbone, substitué par un ou plusieurs groupes alkyle en C₁ à C₁₂;
R² représente un radical -NHR¹ ou -NHCₙH₂ₙ₊₁, où l'indice n est égal à 0 ou représente un nombre entier qui varie de 1 à 8;
pour la stabilisation d'huile de bitume et de mélanges contenant des bitumes.
